# EUROPEAN PATENT SPECIFICATION

(11) **EP 1 083 759 B1**
(45) Date of publication and mention of the grant of the patent: **09.06.2004**
(21) Application number: 00911424.0
(22) Date of filing: 28.03.2000
(51) Int. Cl.: H04Q 7/20, H04Q 7/32

(54) **COMMUNICATION TERMINAL DEVICE AND BASE STATION DEVICE**
KOMMUNIKATIONS-ENDGERÄT UND BASISSTATION
DISPOSITIF DE TERMINAL DE COMMUNICATION ET DISPOSITIF DE STATION DE BASE

(30) Priority: 02.04.1999 JP 9696399; 15.03.2000 JP 2000072819
(43) Date of publication of application: 14.03.2001
(73) Proprietor: MATSUSHITA ELECTRIC INDUSTRIAL CO., LTD., Kadoma-shi, Osaka 571-8501 (JP)
(72) Inventor: OKUBO, Yoshiyuki, Minami-ku, Yokohama-shi, Kanagawa 232-00 (JP); HORIKAWA, Izumi, Kanazawa-ku, Yokohama-shi, Kanagawa 236- (JP)
(74) Representative: Grünecker, Kinkeldey, Stockmair & Schwanhäusser Anwaltssozietät
(86) International application number: PCT/JP2000/001911
(87) International publication number: WO 2000/060884

(56) References cited:
- WO-A-96/14719
- WO-A-98/58511
- WO-A1-98/44685
- GB-A- 2 329 303
- JP-A- 6 338 962
- JP-A- 9 130 843
- JP-A- 9 200 378
- JP-A- 10 327 463
- US-A- 5 802 471
- US-A- 5 884 190

## Description

### Technical Field

The present invention relates to a communication terminal apparatus and a base station apparatus used in a digital mobile communication system.

### Background Art

Communications using digital cellular phones in Japan are currently carried out according to a PDC (Personal Digital Cellular) system, which is a unified standard in Japan. The PDC system uses a TDMA (Time Division Multiple Access) system in which a radio channel of a same frequency is assigned to every mobile station user for an allotted time. According to the TDMA system, a frequency shared by a plurality of mobile station users is divided into units called "frames" having time periodicity and a frame is further divided into several slots. A channel through which each mobile station user performs communications is determined by assigning each slot to each mobile station user.

However, when each frame is divided into slots, there are certain limits to shortening the slot length, hence limits to increasing the number of channels in the TDMA system. Moreover, to increase the number of channels in the TDMA system, increasing the length of each frame and thereby increasing the number of slots included in the frame will result in increased intervals between slots assigned to a same mobile station user, making it difficult to perform high-speed data communications. Therefore, under the PDC system under which there are limits to frequency bands used, it is well imaginable that the time will come that the system will no longer be able to cope with an increased number of channels in view of the recent increase in the number of digital cellular phone subscribers.

For this reason, in order to solve the above problem, a CDMA (Code Division Multiple Access) system is recently becoming a focus of attention as a communication system for the next-generation digital mobile communication system and CDMA-based technological development is underway in an increasing manner. The CDMA system is a system implementing multiple access by applying coding processing to signals of each channel so that each channel can be distinguished.

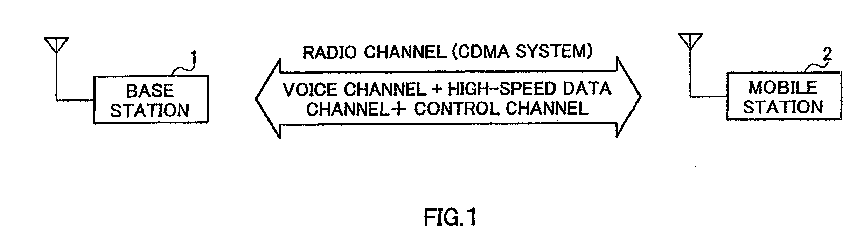

A digital mobile communication system using a conventional CDMA system will be explained. FIG.1 illustrates a configuration of a CDMA-based digital mobile communication system. This digital mobile communication system is configured by base station 1 and mobile station 2, which can communicate with this base station. In this digital mobile communication system, communications between the base station and mobile station are carried out with a voice channel, high-speed data channel and control channel all multiplexed on a same radio channel.

Here, in this CDMA-based digital mobile communication system, the chip rate of a spreading code used to apply coding processing to signals of each channel is constant. Because of this, in the CDMA-based digital mobile communication system, the spreading factor is changed according to the required data transfer rate, which varies between a voice communication and high-speed data communication. That is, the higher the data transfer rate, the lower the spreading factor becomes. When the spreading factor decreases as the data transfer rate increases, the bit error rate also increases, deteriorating the communication quality.

Therefore, to prevent the communication quality from deteriorating due to a reduction of the spreading factor, the conventional CDMA-based digital mobile communication system controls high bit rate communications with a high data transfer rate so that signal power is increased. This makes it possible to keep signal energy per bit constant and stabilize the communication quality.

However, the conventional CDMA-based digital mobile communication system has the following problems:

That is, such control causes a high-speed data communication with a higher data transfer rate to have greater signal power than a voice communication with a lower data transfer rate. When a high-speed data communication has greater signal power than a voice communication, in the case where a voice channel and high-speed data channel are multiplexed on a same radio channel as shown in FIG.1, the high-speed data communication with greater power becomes an interference component against the voice communication with smaller power, resulting in deterioration of the quality of voice communication.

Moreover, multiplexing a voice channel that requires a real-time characteristic and a high-speed data channel that requires no real-time characteristic on the same radio channel is not appropriate from the standpoint of the nature of each signal.

WO 98/58511 provides a cellular telephone capable of operating within at least three separate cellular communication protocols. The document teaches to include processing functionality necessary for carrying out these three separate modes of operation for a triple mode phone. A switching circuitry is capable of determining the communication protocol by which the triple mode phone ten is currently served. Based on this determination result, the phone automatically switches to the appropriate operation mode and enables transmission and reception of signals according to the desired protocol. Further, the switching circuitry may be manually activated to enable the user to initiate operation of a particular protocol necessary.

US-A-5,884,190 provides a method for making a data transmission connection from a computer to a mobile communication network for the transmission of analog and/or digital signals. The computer is connected to the mobile communication network by means of a telecommunication terminal, which is in a local data transmission connection with the computer. The underlying idea in this document is to perform a testing to determine to which telecommunication network a connection can be made from the telecommunication terminal. After the testing, one of the available mobile communication networks is selected and the telecommunication terminal is set into an operation mode corresponding to the selected

The data transmission connection from the computer to the mobile communication terminal is set up according to the operation mode selected, wherein the data transmission connection is formed from the computer to the mobile communication network. The operation mode is selected primarily by the telecommunication terminal by the user of by an application used in the computer if necessary.

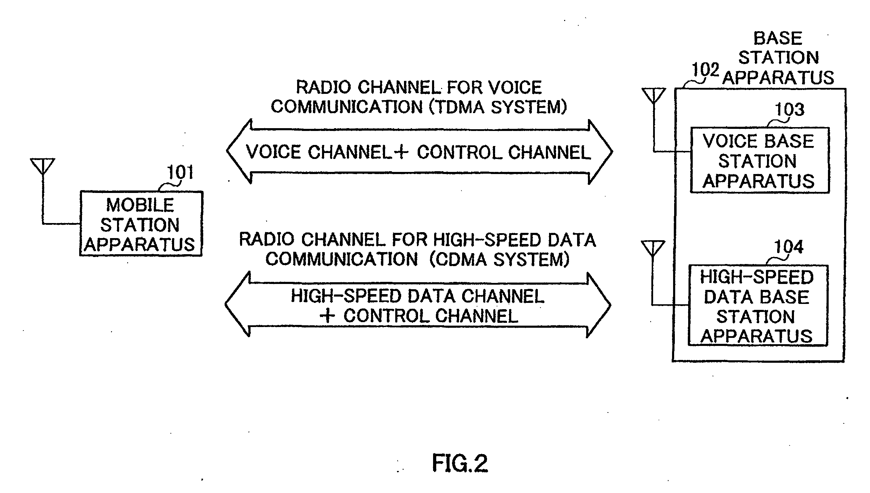

WO 96/14719 discloses a common communication system providing information regarding the availability of other communication systems within the common communication system coverage area to a generic programmable subscriber unit. The subscriber unit selects one of the communication systems available and receives enabling programming from the communication system. An enabling programming permits the subscriber unit to configure itself to operate on the selected communication system. The text passage on page 4, lines 4 to 35 and figure 2 describes in more detail how the subscriber unit monitors the information being transmitted by the common communication system informing the subscriber unit on the availability of the communication systems that may be used.

### Disclosure of Invention

It is an object of the present invention to provide a communication terminal apparatus and a base station apparatus capable of preventing the quality of a voice communication with a low data transfer rate from deteriorating so that a high-speed data communication signal with greater power because of a high data transfer rate does not affect a voice communication signal with smaller power because of a low data transfer rate.

The present inventor has come up with the present invention after focusing on the fact that the reason for deterioration of the quality of a voice communication with a low data transfer rate is that a communication is carried out by multiplexing a voice channel and high-speed data channel on a same radio channel and discovering that separating the radio channel used by the voice channel from the radio channel used by the high-speed data channel can prevent the quality of the voice communication from deteriorating.

Thus, in order to attain the above object, the present invention separates the radio channel for the voice communication from the radio channel for the high-speed data communication and carries out an appropriate communication according to the type of communication channel by channel, thus preventing the voice communication from being affected by the high-speed data communication.

### Brief Description of Drawings

FIG.1 is a configuration diagram showing a configuration of a conventional radio communication system;
FIG.2 is a configuration diagram showing a configuration of a radio communication system according to Embodiment 1 of the present invention;
FIG.3 is a block diagram showing a configuration of a mobile station apparatus according to Embodiment 1 of the present invention;
FIG.4 is a block diagram showing a configuration of a radio channel control section according to Embodiment 1 of the present invention;
FIG.5 is a flow chart to explain the operation of the mobile station apparatus according to Embodiment 1 of the present invention;
FIG.6 is a configuration diagram showing a configuration of a radio communication system according to Embodiment 2 of the present invention;
FIG.7 is a block diagram showing a configuration of a mobile station apparatus according to Embodiment 2 of the present invention;
FIG.8 is a block diagram showing a configuration of a radio channel control section according to Embodiment 2 of the present invention;
FIG.9 is a flow chart to explain the operation of the mobile station apparatus according to Embodiment 2 of the present invention;
FIG.10 is a block diagram showing a configuration of a base station apparatus according to Embodiment 2 of the present invention;
FIG.11 is a configuration diagram showing a configuration of a radio communication system according to Embodiment 3 of the present invention;
FIG.12 is a block diagram showing a configuration of a mobile station apparatus according to Embodiment 3 of the present invention;
FIG.13 is a block diagram showing a configuration of an HDR section of the mobile station apparatus according to Embodiment 3 of the present invention;
FIG.14 is a diagram showing a frame configuration of high-speed data received by the mobile station apparatus according to Embodiment 3 of the present invention;
FIG.15 is a flow chart to explain the operation of the mobile station apparatus according to Embodiment 3 of the present invention;
FIG.16 is a block diagram showing a configuration of a base station apparatus according to Embodiment 3 of the present invention; and
FIG.17 is a block diagram showing a configuration of an HDR section of the base station apparatus according to Embodiment 3 of the present invention.

### Best Mode for Carrying out the Invention

With reference now to the attached drawings, embodiments of the present invention will be explained in detail below.

### (Embodiment 1)

Embodiment 1 of the present invention will be explained using FIG.2 to FIG.5.

FIG.2 is a configuration diagram of a radio communication system according to Embodiment 1 of the present invention. This radio communication system is configured by mobile station apparatus 101, base station apparatus 102 that can communicate with this mobile station apparatus 101, voice base station apparatus 103 included in base station apparatus 102 and high-speed data base station apparatus 104 included in base station apparatus 102.

Mobile station apparatus 101 is a mobile station apparatus capable of carrying out both voice communication and high-speed data communication. Voice base station apparatus 103 is included in base station apparatus 102 and is a base station apparatus that carries out voice communications with mobile station apparatus 101 using a radio channel for voice communication. High-speed data base station apparatus 104 is included in base station apparatus 102 and is a base station apparatus that carries out high-speed data communications with mobile station apparatus 101 using a radio channel for high-speed data communication.

The radio channel for voice communication is configured by a voice channel and a control channel based on a TDMA-based data transfer rate and communication system.

The radio channel for high-speed data communication is configured by a high-speed data channel and a control channel based on a CDMA-based data transfer rate and communication system.

When a voice signal is received, mobile station apparatus 101 receives not only a voice signal but also a control signal notifying that the communication is a voice communication, using a control channel of the radio channel for voice communication. On the other hand, when a high-speed data signal is received, mobile station apparatus 101 receives not only a high-speed data signal but also a control signal notifying that the communication is a high-speed data communication, using a control channel of the radio channel for high-speed data communication.

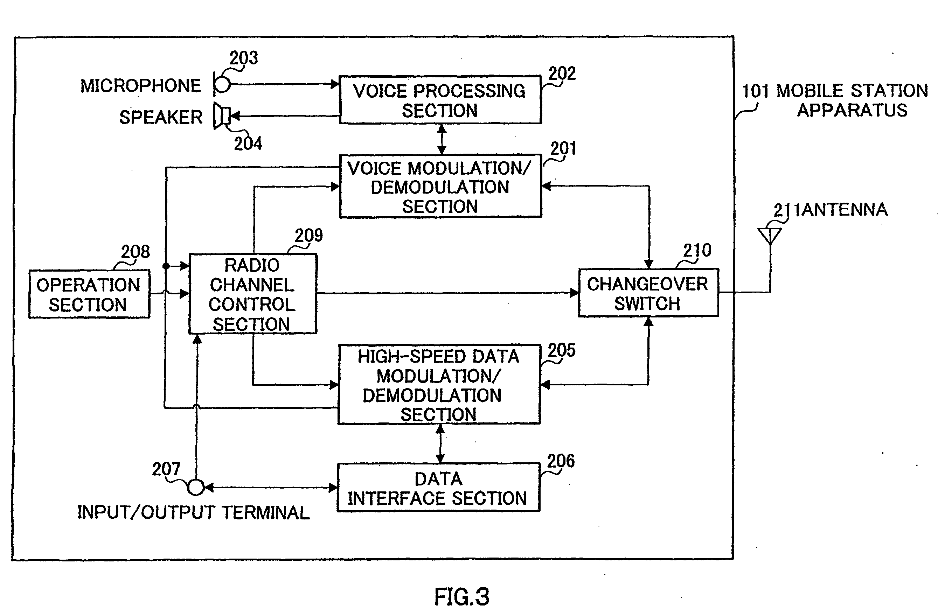

Next, the configuration of mobile station apparatus 101 will be explained. FIG.3 is a block diagram showing the configuration of mobile station apparatus 101.

Voice modulation/demodulation section 201 is used when mobile station apparatus 101 carries out a voice communication, and carries out predetermined radio processing and TDMA-based modulation/demodulation processing on a voice signal transmitted/received through antenna 211. Furthermore, voice modulation/demodulation section 201 carries out demodulation processing on a control signal received using the control channel of the radio channel for voice communication.

When mobile station apparatus 101 carries out voice transmission, voice processing section 202 applies voice coding processing on an analog voice signal output from microphone 203 and converts the analog voice signal to a digital voice signal.

When mobile station apparatus 101 carries out voice reception, voice processing section 202 applies voice decoding processing on a digital voice signal and converts the digital signal to an analog voice signal. The converted analog voice signal is output as voice from speaker 204.

High-speed data modulation/demodulation section 205 is used when mobile station apparatus 101 carries out high-speed data communication, and performs predetermined radio processing and CDMA-based modulation/demodulation processing on a high-speed data signal transmitted/received through antenna 211. Furthermore, high-speed data modulation/demodulation section 205 carries out demodulation processing on the received control signal using a control channel of the radio channel for high-speed data communication.

Data interface section 206 performs mutual conversion between a data format in high-speed data modulation/demodulation section 205 and a data format in an external apparatus so that mobile station apparatus 101 can perform data input/output via data input/output terminal 207 to/from an external apparatus, which is not shown in the figure.

Operation section 208 is configured by a push button or the like. Operation section 208 is used when mobile station apparatus carries out transmission, and outputs a call request signal to radio channel control section 209 based on the user's operations.

When the call request signal is output from operation section 208, radio channel control section 209 detects whether any external apparatus, which is not shown in the figure, is connected to input/output terminal 207 or not. Radio channel control section 209 also decides whether the type of a communication is a voice communication or high-speed data communication from a control signal demodulated by voice modulation/demodulation section 201 and high-speed data modulation/demodulation section 205. Radio channel control section 209 controls changeover switch 210 based on the detection result or the decision result.

Changeover switch 210 connects antenna 211 with both voice modulation/demodulation section 201 and high-speed data modulation/demodulation section 205 until a control signal is output from radio channel control section 209. Furthermore, changeover switch 210 connects antenna 211 with either voice modulation/demodulation section 201 or high-speed data modulation/demodulation section 205 based on a control signal from radio channel control section 209.

As shown above, equipped with radio channel control section 209, mobile station apparatus 101 performs a voice communication using a radio channel for voice communication according to a TDMA system and performs a high-speed data communication using a radio channel for high-speed data communication according to a CDMA system, that is, mobile station apparatus 101 can select a radio channel according to the type of communication.

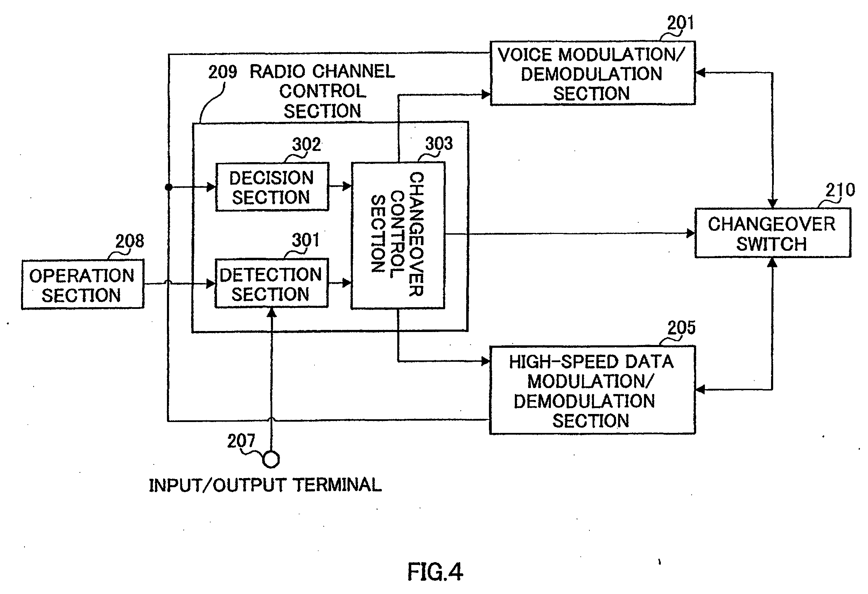

Then, the configuration of radio channel control section 209 will be explained. FIG.4 is a block diagram showing the configuration of radio channel control section 209. Radio channel control section 209 is configured by detection section 301, decision section 302 and changeover control section 303.

Detection section 301 is used when mobile station apparatus 101 carries out transmission, and detects whether any external apparatus, which is not shown in the figure, is connected to input/output terminal 207 or not and outputs a detection signal indicating the detection result to changeover control section 303.

That is, in the case where an external apparatus, which is not shown in the figure, is connected to input/output terminal 207, detection section 301 outputs a detection signal requesting a high-speed data communication to changeover control section 303. In the case where no external apparatus, which is not shown in the figure, is connected to input/output terminal 207, detection section 301 outputs a detection signal requesting a voice communication to changeover control section 303.

Decision section 302 is used when mobile station apparatus 101 performs reception, and decides whether the type of communication is a voice communication or high-speed data communication from a control signal demodulated by voice modulation/demodulation section 201 and high-speed data communication and outputs a control signal indicating the decision result to changeover control section 303.

Changeover control section 303 outputs a control signal to operate changeover switch 210 to changeover switch 210 based on the content of the detection signal or the control signal. That is, changeover control section 303 operates changeover switch 210 based on the content of the detection signal or the control signal.

More specifically, in the case where it is judged that a voice communication will be carried out, changeover control section 303 connects a line linking voice modulation/demodulation section 201 to antenna 211 and disconnects a line linking high-speed data modulation/demodulation section 205 to antenna 211. On the other hand, in the case where it is judged that a high-speed data communication will be carried out, changeover control section 303 connects a line linking high-speed data modulation/demodulation section 205 to antenna 211 and disconnects a line linking voice modulation/demodulation section 201 to antenna 211.

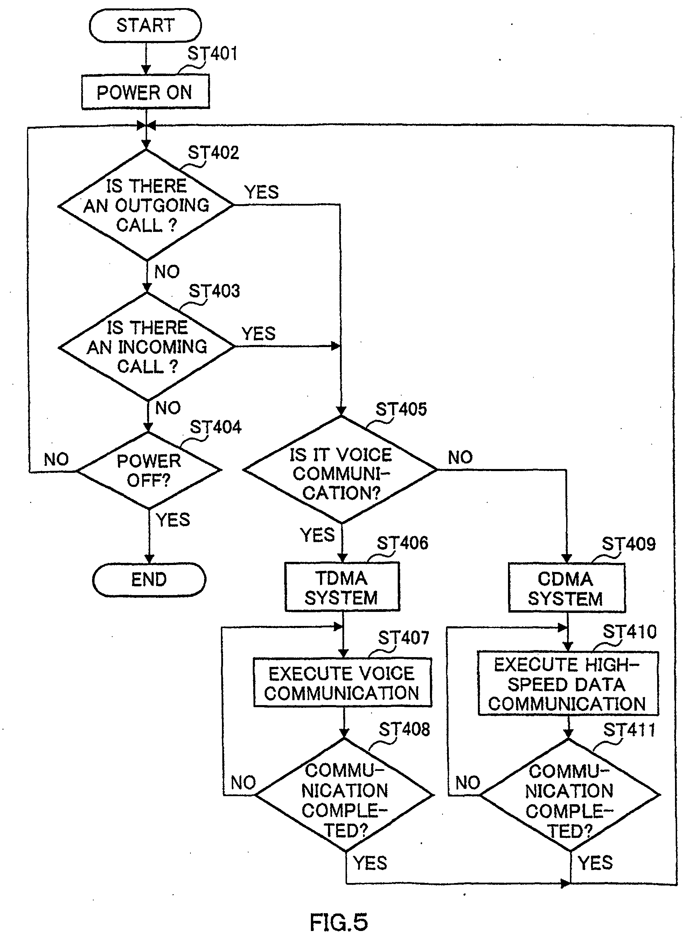

Then, the operation of mobile station apparatus 101 having the above configuration will be explained using the flow chart in FIG.5.

In steps (hereinafter referred to as "ST") 401 to ST404, power to mobile station apparatus 101 is turned ON and it is checked whether there is any outgoing call from mobile station apparatus 101. In the case where there is an outgoing call, the process moves on to ST405, which will be described later and in the case where there is no outgoing call, it is checked whether there is any incoming call to mobile station apparatus 101. In the case where there is an incoming call, the process moves on to ST405, which will be described later and in the case where there is no incoming call, it is checked whether power to mobile station apparatus 101 is turned OFF or not. In the case where power to mobile station apparatus 101 is turned OFF, the processing ends here and in the case where power is not turned OFF, the system moves back to ST402 and it is checked whether there is any outgoing call again.

In the case where the process moves from ST402 or ST403 to ST405, it is decided in ST405 whether the type of communication is a voice communication or a high-speed data communication.

In the case where mobile station apparatus 101 carries out transmission, detection section 301 detects whether any external apparatus, which is not shown in the figure, is connected to input/output terminal section 207 triggered by the user of mobile station 101 operating operation section 208. Then, detection section 301 outputs a detection signal indicating the detection result to changeover control section 303.

In the case where mobile station apparatus 101 carries out reception, decision section 302 decides whether the type of communication is voice communication or high-speed data communication based on a control signal demodulated by voice modulation/demodulation section 201 or high-speed data modulation/demodulation section 205. Then, decision section 302 outputs a control signal indicating the decision result to changeover control section 303.

Changeover control section 303 decides whether the type of communication is a voice communication or high-speed data communication based on the content of the detection signal or the control signal. In the case where the decision result shows that it is a voice communication, the process moves on to ST406 and in the case where the decision result shows that it is a high-speed data communication, the process moves on to ST409.

In the case where the process moves on to ST406, changeover control section 303 operates changeover switch 210 to connect a line linking voice modulation/demodulation section 201 to antenna 211 and disconnects a line linking high-speed data modulation/demodulation section 205 to antenna 211. This makes voice modulation/demodulation section 201 perform TDMA-based modulation/demodulation processing on a transmitted/received voice signal. Thus, a TDMA-based call is established during a voice communication.

In ST407, a TDMA-based voice communication is carried out. That is, regarding the voice signal, a communication is carried out between mobile station apparatus 101 and voice base station apparatus 103 based on a TDMA-based data transfer rate and communication system using a radio channel for voice communication

In ST408, it is checked whether the voice communication has been completed or not, and in the case where the voice communication has been completed, the process moves back to ST402 and in the case where the voice communication is in progress, the process moves back to ST407.

On the other hand, in the case where the process moves from ST405 to ST409, changeover control section 303 operates changeover switch 210 to connect a line linking high-speed data modulation/demodulation section 205 to antenna 211 and disconnects a line linking voice modulation/demodulation section 201 to antenna 211. This makes high-speed data modulation/demodulation section 205 perform CDMA-based modulation/demodulation processing on a transmitted/received high-speed data signal. Thus, a CDMA-based call is established during a high-speed data communication.

In ST410, a CDMA-based high-speed data communication is carried out. That is, regarding the high-speed data, a communication is carried out between mobile station apparatus 101 and high-speed data base station apparatus 104 based on a CDMA-based data transfer rate and communication system using a radio channel for high-speed data communication.

In ST411, it is checked whether the high-speed data communication has been completed or not, and in the case where the high-speed data communication has been completed, the process moves back to ST402 and in the case where the high-speed data communication is in progress, the process moves back to ST410.

As shown above, this embodiment makes it possible to carry out a communication by selecting a radio channel to be used according to the use in such a way that a voice communication is carried out using a TDMA-based radio channel for voice communication during a voice communication and a high-speed data communication is carried out using a CDMA-based radio channel for high-speed data communication during a high-speed data communication. As a result, it is possible to prevent the voice communication from being affected by the high-speed data communication, thus preventing deterioration of the quality of the voice communication. It is also possible to perform a radio communication based on an appropriate communication system according to the type of communication.

Furthermore, this embodiment is implemented by simply adding a base station apparatus based on a CDMA system, which is a next-generation digital cellular phone communication system, to a base station apparatus installed based on a TDMA system, which is a current digital cellular phone communication system in Japan. That is, no changes need to be added to the existing base station apparatus installed based on the TDMA system. In this way, it is possible to easily implement a mobile communication system capable of preventing deterioration of the quality of voice communication. Furthermore, since there is no need to discard the existing base station apparatus installed based on the TDMA system, it is possible to contribute to effective utilization of resources.

### (Embodiment 2)

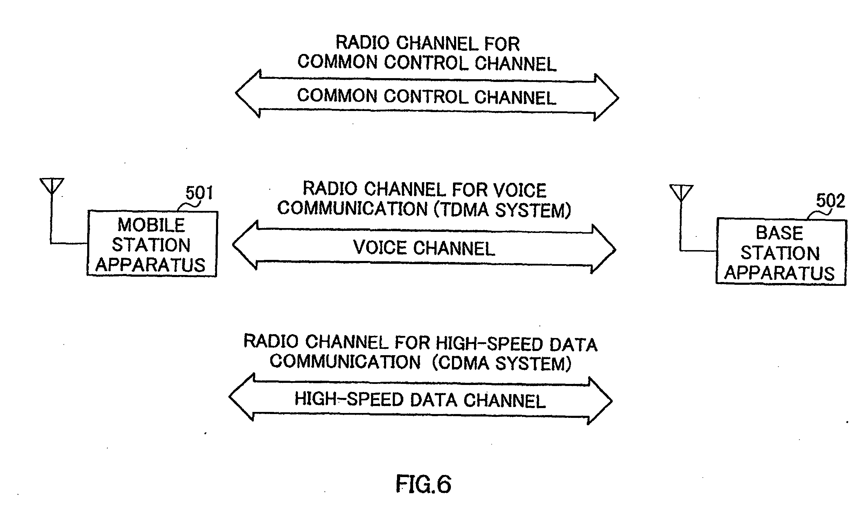

Embodiment 2 of the present invention will be explained suing FIG.6 to FIG.10.

FIG.6 is a configuration diagram of a radio communication system according to Embodiment 2 of the present invention. This radio communication system is configured by mobile station apparatus 501 and base station apparatus 502 that can communicate with this mobile station apparatus 501.

Mobile station apparatus 501 is a mobile station apparatus capable of carrying out both voice communication and high-speed data communication. Base station apparatus 502 is a base station apparatus capable of carrying out both voice communication and high-speed data communication.

A radio channel for a common control channel is a radio channel for a common control signal used for mobile station apparatus 501 and base station apparatus 502 to decide the type of communication. Moreover, the radio channel for the common control channel is configured by a common control channel, which is digital-modulated based on a TDMA system with a lower data transfer rate and narrower band than a TDMA system used for a voice signal.

The radio channel for voice communication is a radio channel used when mobile station apparatus 501 and base station apparatus 502 carry out a voice communication. Furthermore, the radio channel for voice communication is configured by a voice channel, which is digital-modulated based on a TDMA-based data transfer rate and communication system.

The radio channel for high-speed data communication is a radio channel used when mobile station apparatus 501 and base station apparatus 502 carry out a high-speed data communication. Furthermore, the radio channel for high-speed data communication is configured by a high-speed data channel, which is digital-modulated based on a CDMA-based data transfer rate and communication system.

When a voice signal is received, mobile station apparatus 501 receives a common control signal notifying that the communication is a voice communication using the radio channel for common control channel. On the other hand, when a high-speed data signal is received, mobile station apparatus 501 receives a common control signal notifying that the communication is a high-speed data communication using the radio channel for common control channel.

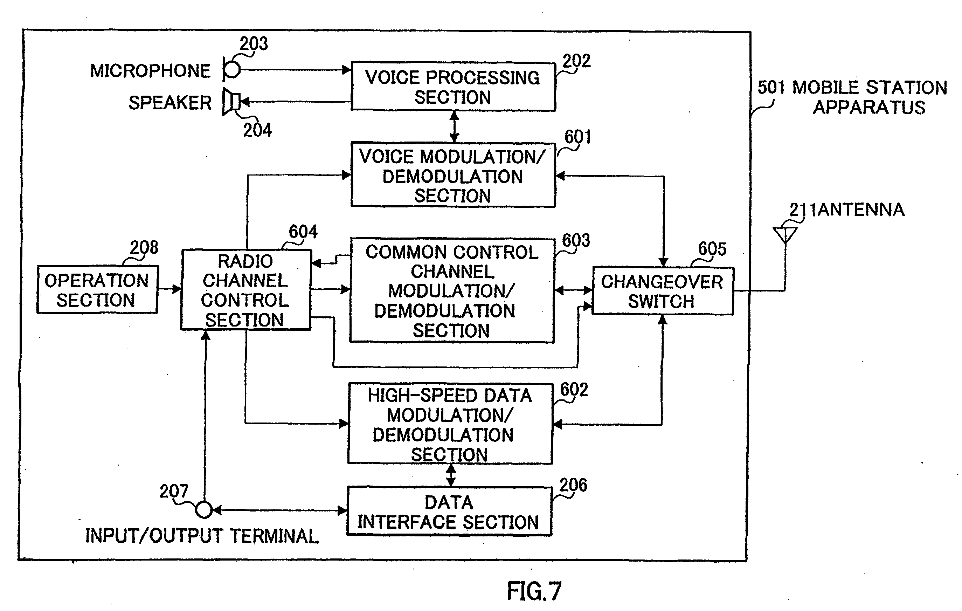

Next, the configuration of mobile station apparatus 501 will be explained. FIG.7 is a block diagram showing the configuration of mobile station apparatus 501. However, components in FIG.7 with the same configuration and operation as those of the components shown in FIG.3 will be assigned the same reference numerals and their explanations will be omitted.

voice modulation/demodulation section 601 is used when mobile station apparatus 501 carries out a voice communication, and carries out predetermined radio processing and TDMA-based modulation/demodulation processing on a voice signal transmitted/received through antenna 211.

High-speed data modulation/demodulation section 602 is used when mobile station apparatus 501 carries out a high-speed data communication, and performs predetermined radio processing and CDMA-based modulation/demodulation processing on a high-speed data signal transmitted/received through antenna 211.

Common control channel modulation/demodulation section 603 carries out predetermined radio processing and modulation/demodulation processing based on a TDMA system with a lower data transfer rate and narrower band than the TDMA system used for a voice signal on a common control signal transmitted/received through antenna 211.

When a call request signal is output from operation section 208, radio channel control section 604 detects whether any external apparatus, which is not shown in the figure, is connected to input/output terminal 207 or not. Radio channel control section 604 also decides whether the type of communication is a voice communication or high-speed data communication from a common control signal demodulated by common control channel modulation/demodulation section 603. Radio channel control section 604 controls changeover switch 605 based on the detection result or the decision result.

Changeover switch 605 connects antenna 211 with common control channel modulation/demodulation section 603 until a control signal is output from radio channel control section 604. Furthermore, changeover switch 605 connects antenna 211 with either voice modulation/demodulation section 601 or high-speed data modulation/demodulation section 602 based on a control signal from radio channel control section 604.

As shown above, equipped with radio channel control section 604, mobile station apparatus 501 performs a voice communication using a radio channel for voice communication according to a TDMA system and performs a high-speed data communication using a radio channel for high-speed data communication according to a CDMA system, that is, mobile station apparatus 501 can select a radio channel according to the type of communication.

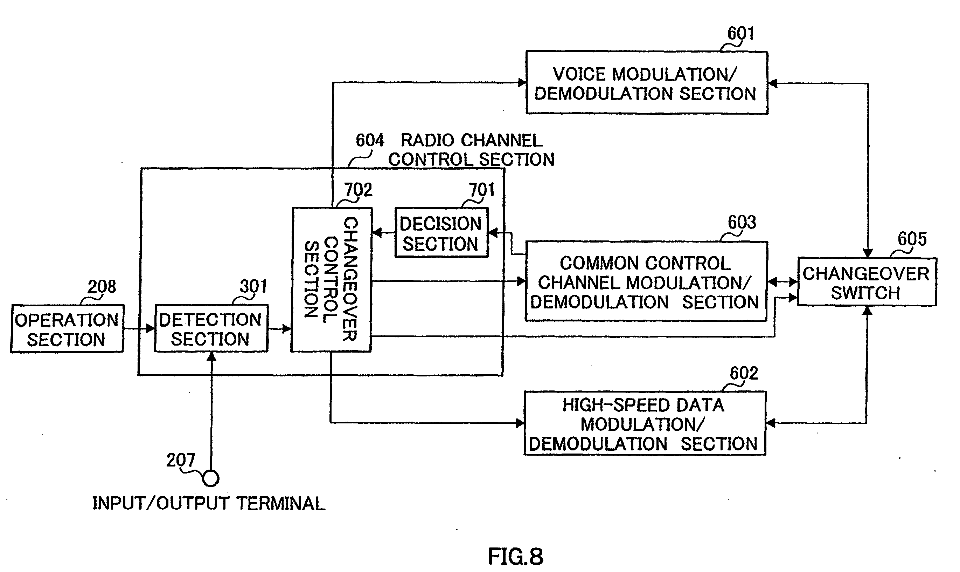

Then, the configuration of radio channel control section 604 will be explained. FIG.8 is a block diagram showing the configuration of radio channel control section 604. However, components of the detection section shown in FIG.8 that have the same configuration and operation as those in FIG.4 will be assigned the same reference numerals and their explanations will be omitted.

Radio channel control section 604 is configured by detection section 301, decision section 701 and changeover control section 702.

Decision section 701 is used when mobile station apparatus 501 carries out reception, and decides whether the type of communication is a voice communication or high-speed data communication based on a common control signal demodulated by common control channel modulation/demodulation section 603. Then, decision section 701 outputs a control signal indicating the decision result to changeover control section 702.

Changeover control section 702 outputs a control signal to operate changeover switch 605 based on the content of a detection signal from detection section 301 or a control signal from decision section 701 to changeover switch 605. That is, changeover control section 702 operates changeover switch 605 based on the content of the detection signal or the control signal.

More specifically, in the case where it is judged that a voice communication will be carried out, changeover control section 702 connects a line linking voice modulation/demodulation section 601 to antenna 211 and disconnects a line linking high-speed data modulation/demodulation section 602 to antenna 211. On the other hand, in the case where it is judged that a high-speed data communication will be carried out, changeover control section 702 connects a line linking high-speed data modulation/demodulation section 602 to antenna 211 and disconnects a line linking voice modulation/demodulation section 601 to antenna 211.

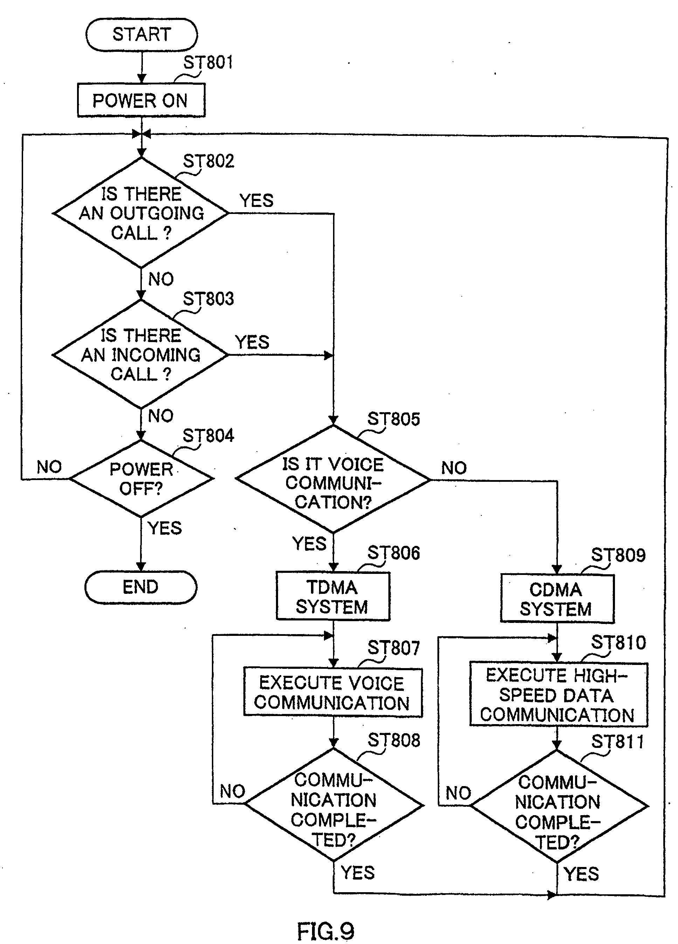

Then, the operation of mobile station apparatus 501 having the configuration above will be explained using the flow chart in FIG.9. However, processing in ST801 to ST804 in FIG.9 is the same as that in ST401 to ST404 in FIG.5, and therefore the explanation thereof will be omitted.

In ST805, it is decided whether the type of communication is a voice communication or a high-speed data communication. In the case where mobile station apparatus 501 carries out transmission, detection section 301 detects whether any external apparatus, which is not shown in the figure, is connected to input/output terminal section 207 triggered by the user of mobile station 501 operating operation section 208. Then, detection section 301 outputs a detection signal indicating the detection result to changeover control section 702.

In the case where mobile station apparatus 501 carries out reception, decision section 701 decides whether the type of communication is a voice communication or high-speed data communication based on a common control signal demodulated by common control channel modulation/demodulation section 603. Then, decision section 701 outputs a control signal indicating the decision result to changeover control section 702.

Changeover control section 702 decides whether the type of communication is a voice communication or high-speed data communication based on the content of the detection signal or the control signal. In the case where the decision result shows that it is a voice communication, the process moves on to ST806 and in the case where the decision result shows that it is a high-speed data communication, the process moves on to ST809.

In the case where the process moves on to ST806, changeover control section 702 changes changeover switch 605 from the common control channel modulation/demodulation section 603 side to the voice modulation/demodulation section 601 side and connects a line linking voice modulation/demodulation section 601 to antenna 211. This makes voice modulation/demodulation section 601 perform TDMA-based modulation/demodulation processing on a transmitted/received voice signal. Thus, a TDMA-based call is established during a voice communication.

In ST807, a TDMA-based voice communication is carried out. That is, regarding the voice signal, a communication is carried out between mobile station apparatus 501 and base station apparatus 502 based on a TDMA-based data transfer rate and communication system using a radio channel for voice communication.

In ST808, it is checked whether the voice communication has been completed or not, and in the case where the voice communication has been completed, the process moves back to ST802 and in the case where the voice communication is in progress, the process moves back to ST807.

On the other hand, in the case where the process moves from ST805 to ST809, changeover control section 702 changes the changeover switch from the common control channel modulation/demodulation section 603 side to the high-speed data modulation/demodulation section 602 side and connects a line linking high-speed data modulation/demodulation section 602 to antenna 211. This makes high-speed data modulation/demodulation section 602 perform CDMA-based modulation/demodulation processing on a transmitted/received high-speed data signal. Thus, a CDMA-based call is established during a high-speed data communication.

In ST810, a CDMA-based high-speed data communication is carried out. That is, regarding the high-speed data, a communication is carried out between mobile station apparatus 501 and base station apparatus 502 based on a CDMA-based data transfer rate and communication system using a radio channel for high-speed data communication.

In ST811, it is checked whether the high-speed data communication has been completed or not, and in the case where the high-speed data communication has been completed, the process moves back to ST802 and in the case where the high-speed data communication is in progress, the process moves back to ST810.

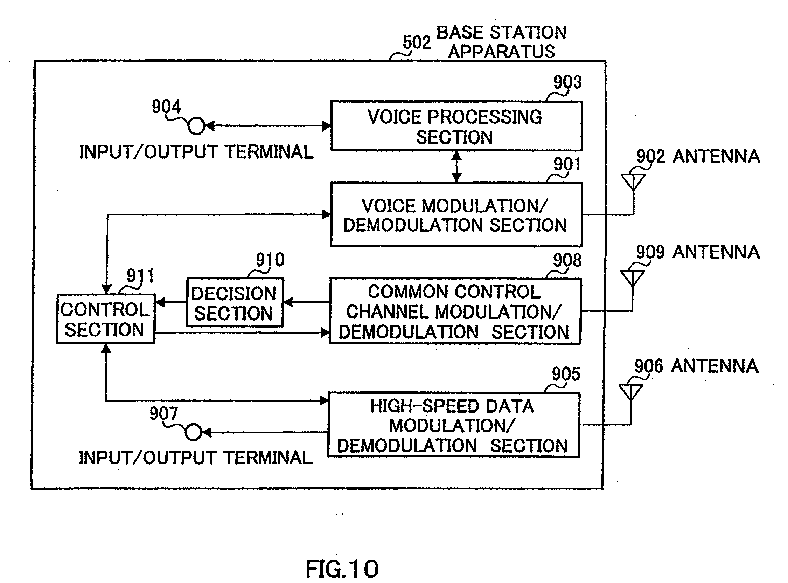

Then, the configuration of base station apparatus 502 will be explained. FIG.10 is a block diagram showing the configuration of base station apparatus 502.

Voice modulation/demodulation section 901 is used when base station apparatus 502 carries out a voice communication, and carries out predetermined radio processing and TDMA-based modulation/demodulation processing on a voice signal transmitted/received through antenna 902.

When base station apparatus 502 carries out voice transmission, voice processing section 903 applies voice coding processing on an analog voice signal output from a higher-level apparatus, which is not shown in the figure, via input/output terminal 904 and converts the analog voice signal to a digital voice signal.

Furthermore, when base station apparatus 502 carries out voice reception, voice processing section 903 applies voice decoding processing on a digital voice signal and converts the digital voice signal to an analog voice signal. Voice processing section 903 outputs the converted analog voice signal to a higher-level apparatus, which is not shown in the figure, via input/output terminal 904.

High-speed data modulation/demodulation section 905 is used when base station apparatus 502 carries out high-speed data communication, and performs predetermined radio processing and CDMA-based modulation/demodulation processing on a high-speed data signal transmitted/received through antenna 906.

Common control channel modulation/demodulation section 908 carries out predetermined radio processing and modulation/demodulation processing based on a TDMA system with a lower data transfer rate and narrower band than the TDMA system used for a voice signal on a common control signal transmitted/received through antenna 909.

Decision section 910 is used when base station apparatus 502 carries out reception, and decides whether the type of communication is voice communication or high-speed data communication based on a common control signal demodulated by common control channel modulation/demodulation section 908 and outputs a control signal indicating the decision result to changeover control section 911.

Control section 911 outputs an operation instruction signal/operation stop instruction signal to voice modulation/demodulation section 901 and high-speed data modulation/demodulation section 905 based on the content of a control signal from decision section 910.

Then, the operation of base station apparatus 502 will be explained using FIG.10. First, the case where base station apparatus 502 carries out reception will be explained.

When a voice signal is received, base station apparatus 502 receives a common control signal notifying that the communication is a voice communication using the radio channel for common control channel. On the other hand, when a high-speed data signal is received, base station apparatus 502 receives a common control signal notifying that the communication is a high-speed data communication using the radio channel for common control channel.

In base station apparatus 502, common control channel modulation/demodulation section 908 performs demodulation processing on the common control signal received through antenna 909. Then, decision section 910 decides whether the type of communication is voice communication or high-speed data communication based on the demodulated common control signal. Then, decision section 910 outputs a control signal indicating the decision result to control section 911.

Control section 911 outputs an operation instruction signal/operation stop instruction signal to voice modulation/demodulation section 901 and high-speed data modulation/demodulation section 905 based on the content of a control signal from decision section 910.

That is, in the case where the type of the communication is voice communication, control section 911 outputs an operation instruction signal to voice modulation/demodulation section 901 and an operation stop instruction signal to high-speed data modulation/demodulation section 905. On the other hand, in the case where the type of the communication is high-speed data communication, control section 911 outputs an operation instruction signal to high-speed data modulation/demodulation section 905 and an operation stop instruction signal to voice modulation/demodulation section 901.

Through the above operations, in the case of a voice communication, the voice signal received through antenna 902 is subjected to demodulation processing by voice modulation/demodulation section 901 and converted to an analog voice signal by voice processing section 903. Then, the converted analog voice signal is output to a higher-level apparatus, which is not shown in the figure, via input/output terminal 904.

On the other hand, in the case of a high-speed data communication, the high-speed data signal received through antenna 906 is subjected to demodulation processing by high-speed data modulation/demodulation section 905. Then, the demodulated high-speed data signal is output to a higher-level apparatus, which is not shown in the figure, via input/output terminal 907.

Then, the case where base station apparatus 502 carries out transmission will be explained. First, control section 911 outputs a common control signal to distinguish whether a signal to be transmitted is a voice signal or high-speed data signal to common control channel modulation/demodulation section 908. The common control signal is modulated by common control channel modulation/demodulation section 908, then transmitted through antenna 909.

Furthermore, control section 911 outputs a common control signal to common control channel modulation/demodulation section 908 and at the same time outputs an operation instruction signal/operation stop instruction signal to voice modulation/demodulation section 901 and high-speed data modulation/demodulation section 905.

That is, in the case where the type of the communication is voice communication, control section 911 outputs an operation instruction signal to voice modulation/demodulation section 901 and an operation stop instruction signal to high-speed data modulation/demodulation section 905. On the other hand, in the case where the type of the communication is high-speed data communication, control section 911 outputs an operation instruction signal to high-speed data modulation/demodulation section 905 and an operation stop instruction signal to voice modulation/demodulation section 901.

Through the above operations, in the case of a voice communication, the voice signal output from a higher-level apparatus, which is not shown in the figure, via input/output terimianl 904 is converted to a digital voice signal by voice processing section 903. Then, the converted digital voice signal is subjected to modulation processing by voice modulation/demodulation section 901 and transmitted through antenna 902.

On the other hand, in the case of a high-speed data communication, the high-speed data signal output from a higher-level apparatus, which is not shown in the figure, via input/output terminal 907 is subjected to modulation processing by high-speed data modulation/demodulation section 905. The modulated high-speed data signal is transmitted through antenna 906.

As shown above, this embodiment makes it possible to carry out a communication by selecting a radio channel to be used according to the use in such a way that a voice communication is carried out using a TDMA-based radio channel for voice communication during a voice communication and a high-speed data communication is carried out using a CDMA-based radio channel for high-speed data communication during a high-speed data communication. As a result, it is possible to prevent the voice communication from being affected by the high-speed data communication, thus preventing deterioration of the quality of the voice communication. It is also possible to perform a radio communication based on an appropriate communication system according to the type of communication.

Furthermore, according to this embodiment, the control channel used by a control signal that controls connections to a radio channel for voice communication and a radio channel for high-speed data communication is separated as an independent common control channel to be used commonly for both radio channels, making it possible to improve the efficiency of frequency utilization in a radio communication system.

On the other hand, it is also possible to use a common control signal digital-modulated based on a TDMA system used for a voice signal. This allows the common control channel and voice channel to use a same frequency band, making it possible to further improve the efficiency of frequency utilization in a radio communication system. Furthermore, since it is possible to perform modulation/demodulation processing for a common control signal based on a TDMA system used for a voice signal, the common control channel modulation/demodulation section and the voice modulation/demodulation section can be unified into one modulation/demodulation section, which simplifies the apparatus configuration of the mobile station apparatus and base station apparatus.

Moreover, it is also possible to use a common control signal digital-modulated based on a CDMA system. This allows the common control channel and high-speed data channel to use a same frequency band, making it possible to further improve the efficiency of frequency utilization in a radio communication system. Furthermore, since it is possible to perform modulation/demodulation processing for a common control signal based on a CDMA system, the common control channel modulation/demodulation section and the high-speed data modulation/demodulation section can be unified into one modulation/demodulation section, which simplifies the apparatus configuration of the mobile station apparatus and base station apparatus.

### (Embodiment 3)

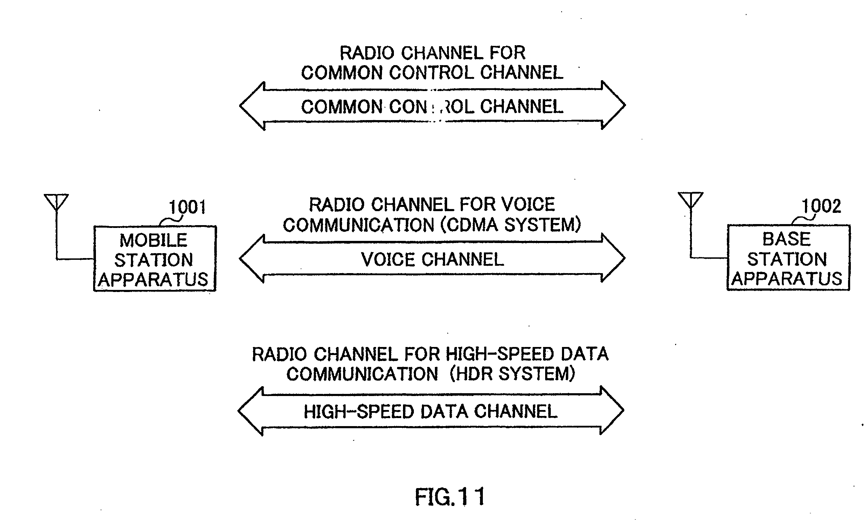

Embodiment 3 of the present invention will be explained suing FIG.11 to FIG.17.

FIG.11 is a configuration diagram of a radio communication system according to Embodiment 3 of the present invention. This radio communication system is configured by mobile station apparatus 1001 and base station apparatus 1002 that can communicate with this mobile station apparatus 1001.

Mobile station apparatus 1001 is a mobile station apparatus capable of carrying out both voice communication and high-speed data communication. Base station apparatus 1002 is a base station apparatus capable of carrying out both voice communication and high-speed data communication.

A radio channel for common control channel is a radio channel for a common control signal used for mobile station apparatus 1001 and base station apparatus 1002 to decide the type of communication.

The radio channel for voice communication is a radio channel used when mobile station apparatus 1001 and base station apparatus 1002 carry out a voice communication. Furthermore, this radio channel for voice communication is configured by a voice channel digital-modulated based on a CDMA system.

The radio channel for high-speed data communication is a radio channel used when mobile station apparatus 1001 and base station apparatus 1002 carry out a high-speed data communication. Furthermore, this radio channel for high-speed data communication is configured by a high-speed data channel digital-modulated based on an HDR (High Data Rate) system.

Here, the HDR system is used for high-speed data communication and is a communication system that improves the transfer efficiency of downlink from a base station apparatus to a mobile station apparatus. In the HDR system, a communication channel (here, a high-speed data channel) is time-divided and assigned to each mobile station apparatus and the transfer rate of the assigned slot is set according to the communication quality.

When a voice signal is received, mobile station apparatus 1001 receives a common control signal notifying that the communication is a voice communication using a radio channel for a common control channel. On the other hand, when a high-speed data signal is received, mobile station apparatus 1001 receives a common control signal notifying that the communication is a high-speed data communication using a radio channel for a common control channel.

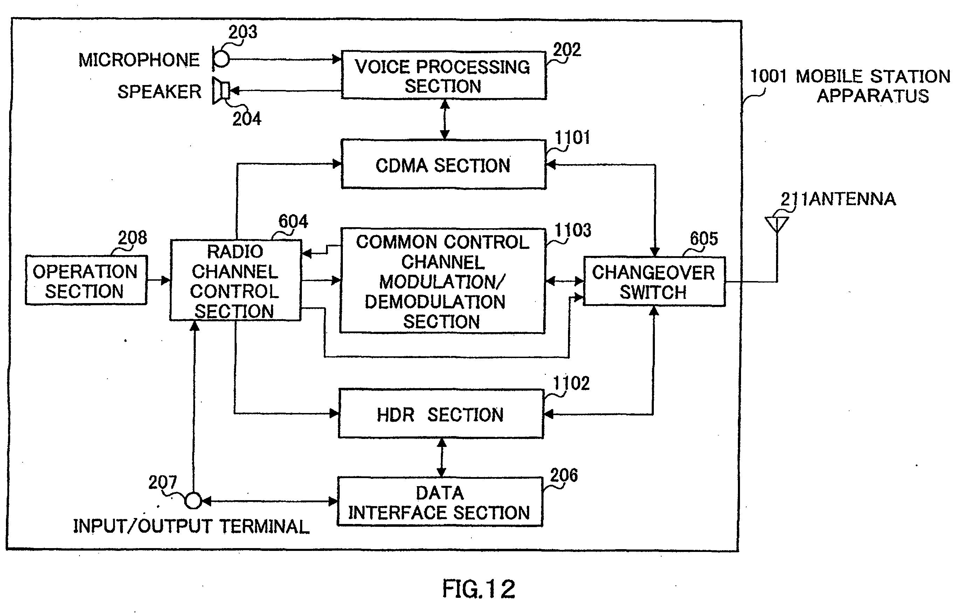

Next, the configuration of mobile station apparatus 1001 will be explained. FIG.12 is a block diagram showing the configuration of mobile station apparatus 1001. However, components with the same configuration and operation as those of the components shown in FIG.7 will be assigned the same reference numerals and their explanations will be omitted.

CDMA section 1101 is used when mobile station apparatus 1001 carries out a voice communication. CDMA section 1101 carries out CDMA-based predetermined radio processing and predetermined modulation/demodulation processing on a voice signal transmitted/received through antenna 211.

HDR section 1102 is used when mobile station apparatus 1001 carries out a high-speed data communication. HDR section 1102 performs HDR-based predetermined radio processing and predetermined modulation/demodulation processing on a high-speed data signal transmitted/received through antenna 211. The detailed configuration of HDR section 1102 will be described later.

Common control channel modulation/demodulation section 1103 carries out predetermined radio processing and modulation/demodulation processing on a common control signal transmitted/received through antenna 211.

As shown above, mobile station apparatus 1001 performs a voice communication using a radio channel for voice communication according to a CDMA system and performs a high-speed data communication using a radio channel for high-speed data communication according to an HDR system, that is, mobile station apparatus 1001 can select a radio channel according to the type of communication.

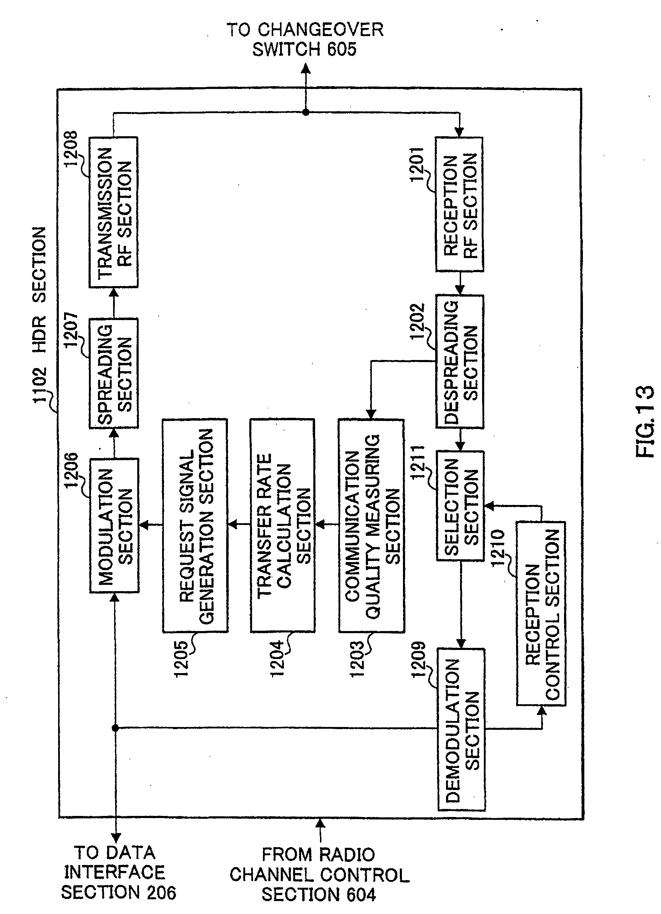

Then, the configuration of HDR section 1102 will be explained. FIG.13 is a block diagram showing the configuration of HDR section 1102.

In HDR section 1102, reception RF section 1201 carries out predetermined radio processing on a received signal and outputs the received signal to despreading section 1202. Despreading section 1202 despreads the received signal. Then, despreading section 1202 outputs a known signal, which is inserted at predetermined intervals into the received signal, to communication quality measuring section 1203 and outputs the part other than the known signal of the received signal to selection section 1211.

Communication quality measuring section 1203 measures a value indicating the communication quality (e.g., s ignal-to-interference ratio, etc.) based on the known signal and outputs the value to transfer rate calculation section 1204. Transfer rate calculation section 1204 calculates a transfer rate value with which it is possible to communicate with base station apparatus 1002 based on the value indicating the communication quality and outputs the value to request signal generation section 1205. Request signal generation section 1205 generates a signal (data rate request signal; hereinafter referred to as "DRR") to notify base station apparatus 1002 of the transfer rate value and outputs the signal to modulation section 1206.

Modulation section 1206 performs predetermined modulation processing on the DRR output from request signal generation section 1205 and transmitted data output from interface section 206 and outputs the modulated signal to spreading section 1207. Spreading section 1207 spreads the signal output from modulation section 1206 and outputs the spread signal to transmission RF section 1208. Transmission RF section 1208 performs predetermined radio processing on the spread signal.

Demodulation section 1209 performs predetermined demodulation processing on a control signal inserted at the beginning of each frame of the received signal and a slot selected by selection section 1211. Reception control section 1210 notifies selection section 1211 of a slot including a signal addressed to the own station based on the control signal inserted at the beginning of each frame of the received signal. Selection section 1211 selects the corresponding slot from the received signal according to the notification from reception control section 1210 and outputs the slot to demodulation section 1209.

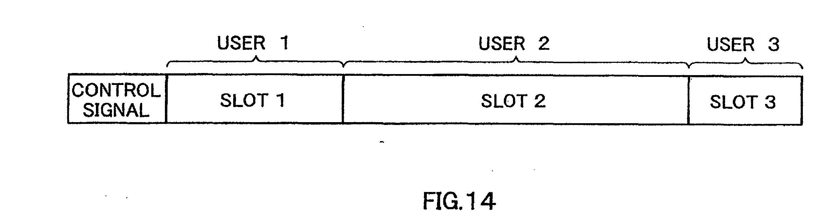

More specifically, demodulation section 1209, reception control section 1210 and selection section 1211 operate as follows. FIG.14 illustrates a frame configuration of high-speed data received by mobile station apparatus 1001. As shown in FIG.14, a control signal indicating the timing at which each slot is transferred and the length of each slot is inserted at the beginning of a frame.

First, demodulation section 1209 demodulates a control signal inserted at the beginning of the frame and outputs the control signal to reception control section 1210. Reception control section 1210 notifies selection section 1211 of the timing at which a slot including a signal addressed to the own station is transferred and the length of the slot according to the content of the control signal. Now, suppose, for example, the user of mobile station apparatus 1001 is user 2. The signal addressed to the own station is included in slot 2. Thus, reception control section 1210 notifies selection section 1211 of the timing at which slot 2 is transferred and the length of slot 2.

Selection section 1211 selects slot 2 from among slots input after the control signal according to the notification from reception control section 1210 and outputs slot 2 to demodulation section 1209. Then, demodulation section 1209 demodulates the signal addressed to the own station included in slot 2. This allows mobile station apparatus 1001 to obtain high-speed data addressed to the own station.

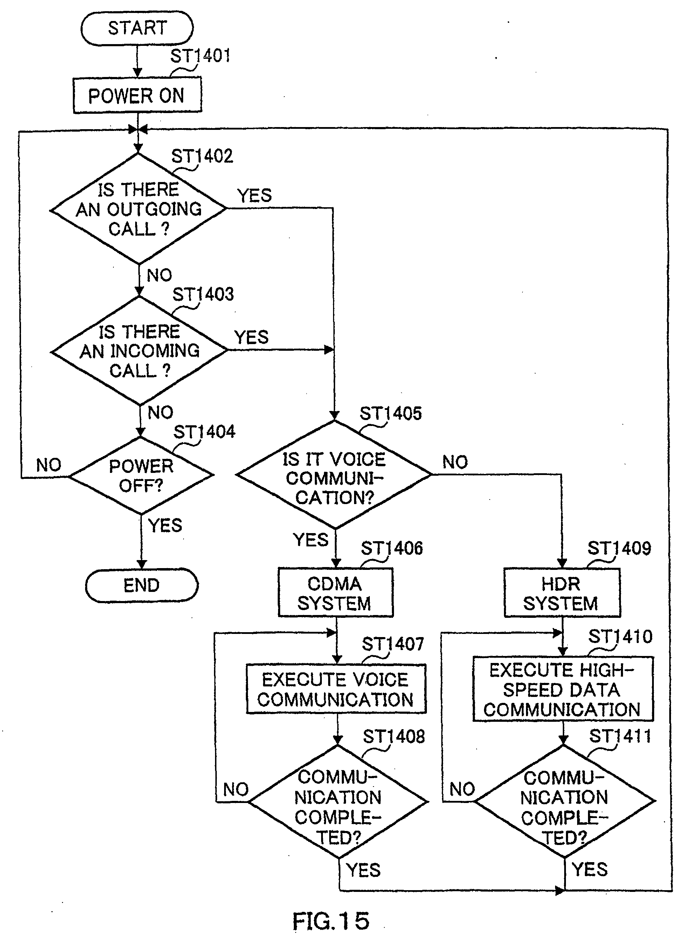

Then, the operation of mobile station apparatus 1001 with the configuration above will be explained using the flow chart in FIG.15. However, in FIG.15, the processing in ST1401 to ST1405 is the same as that in ST801 to ST805 in FIG.9 and its explanation will be omitted.

In ST1406, changeover control section 702 in radio channel control section 604 changes changeover switch 605 from the common control channel modulation/demodulation section 1103 side to the CDMA section 1101 side and connects a line linking CDMA section 1101 to antenna 211. This makes CDMA section 1101 perform modulation/demodulation processing, etc. on a transmitted/received voice signal according to a CDMA system. Thus, a CDMA-based call is established during a voice communication.

In ST1407, a CDMA-based voice communication is carried out. That is, regarding the voice signal, a communication is carried out between mobile station apparatus 1001 and base station apparatus 1002 based on a CDMA system using a radio channel for voice communication.

In ST1408, it is checked whether the voice communication has been completed or not, and in the case where the voice communication has been completed, the process moves back to ST1402 and in the case where the voice communication is in progress, the process moves back to ST1407.

On the other hand, in ST1409, changeover control section 702 in radio channel control section 604 changes changeover switch 605 from the common control channel modulation/demodulation section 1103 side to the HDR section 1102 to connect a line linking HDR section 1102 to antenna 211. This makes HDR section 1102 perform HDR-based modulation/demodulation processing on a transmitted/received high-speed data signal. Thus, an HDR-based call is established during a high-speed data communication.

In ST1410, an HDR-based high-speed data communication is carried out. That is, regarding the high-speed data, a communication is carried out between mobile station apparatus 1001 and base station apparatus 1002 based on an HDR system using a radio channel for high-speed data communication.

In ST1411, it is checked whether the high-speed data communication has been completed or not, and in the case where the high-speed data communication has been completed, the process moves back to ST1402 and in the case where the high-speed data communication is in progress, the process moves back to ST1410.

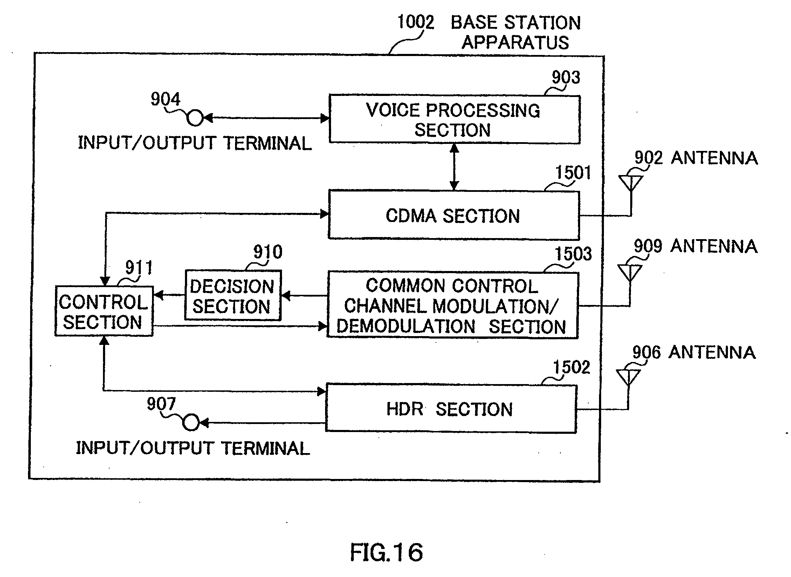

Then, the operation of base station apparatus 1002 will be explained. FIG.16 is a block diagram showing the configuration of base station apparatus 1002. However, the components shown in FIG.16 that have the same configuration and operation as those of the components in FIG.10 are assigned the same reference numerals and their explanation will be omitted.

CDMA section 1501 is used when base station apparatus 1002 carries out a voice communication. CDMA section 1501 performs CDMA-based predetermined radio processing and predetermined modulation/demodulation processing on a voice signal transmitted/received through antenna 902.

HDR section 1502 is used when base station apparatus 1002 carries out a high-speed data communication. HDR section 1502 performs HDR-based predetermined radio processing and predetermined modulation/demodulation processing, etc. on a high-speed data signal transmitted/received through antenna 906.

Common control channel modulation/demodulation section 1503 carries out predetermined radio processing and predetermined modulation/demodulation processing on a common control signal transmitted/received through antenna 909.

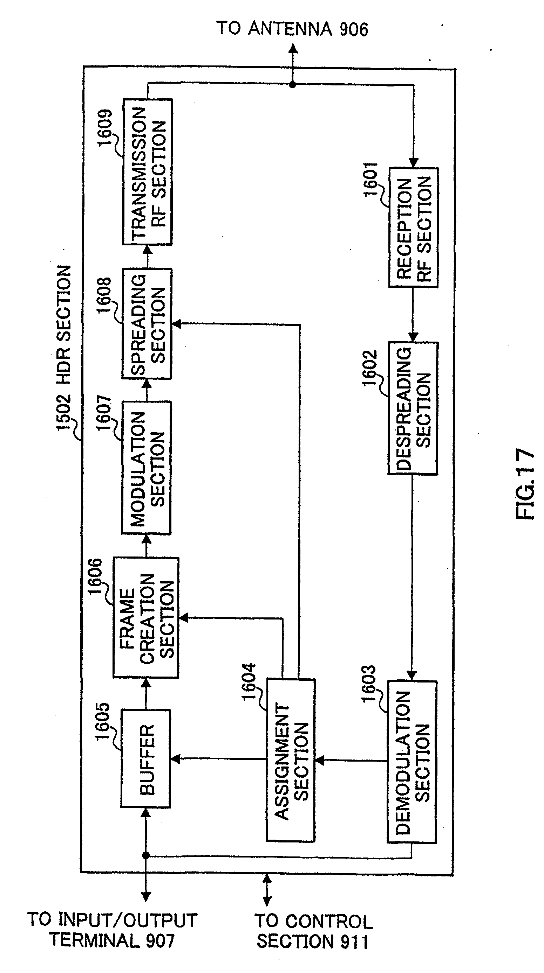

Then, the configuration of HDR section 1502 will be explained. FIG.17 is a block diagram showing the configuration of HDR section 1502.

In HDR section 1502, reception RF section 1601 carries out predetermined radio processing on a received signal and outputs the received signal to despreading section 1602. Despreading section 1602 despreads the received signal and outputs the despread signal to demodulation section 1603. Demodulation section 1603 performs predetermined demodulation processing on the received signal. Then, demodulation section 1603 outputs the DRR notified from each mobile station apparatus to assignment section 1604 and outputs signals other than the DRR to input/output terminal 907. Assignment section 1604 decides assignment of communication resources to each mobile station apparatus based on the DRR notified from each mobile station apparatus.

Then, assignment section 1604 instructs buffer 1605 to output transmitted data according to the determined assignment of the communication resources. Moreover, assignment section 1604 notifies frame creation section 1606 of the determined assignment of the communication resources. Assignment section 1604 also instructs spreading section 1608 about a spreading code to spread the transmitted data.

Buffer 1605 temporarily stores the transmitted data output via input/output terminal 907 and outputs the transmitted data to frame creation section 1606 according to the instruction from assignment section 1604.

Frame creation section 1606 converts the transmitted data addressed to mobile station apparatuses to their respective slots according to the assignment of the communication resources notified from assignment section 1604, and then creates a frame combining those slots. Furthermore, frame creation section 1606 adds a control signal indicating the timing at which each slot is transferred and the length of each slot at the beginning of each frame. In this way, a frame with a configuration shown in FIG.14 is created. Frame creation section 1606 inserts a known signal into the transmitted data at predetermined intervals. Then, frame creation section 1606 outputs the created frame to modulation section 1607.

Modulation section 1607 performs predetermined modulation processing on the transmitted data and outputs the modulated signal to spreading section 1608. Spreading section 1608 spreads the signal output from modulation section 1607 using a spreading code instructed by assignment section 1604. Transmission RF section 1609 performs predetermined radio processing on the spread signal.

Then, the operation of base station apparatus 1002 will be explained using FIG.16. First, the case where base station apparatus 1002 carries out reception will be explained.

When a voice signal is received, base station apparatus 1002 receives a common control signal notifying that the communication is a voice communication using the radio channel for the common control channel. Furthermore, when a high-speed data signal is received, base station apparatus 1002 receives a common control signal notifying that the communication is a high-speed data communication using a radio channel for a common control channel.

In base station apparatus 1002, common control channel modulation/demodulation section 1503 performs demodulation processing on the common control signal received through antenna 909. Decision section 910 decides whether the type of communication is a voice communication or high-speed data communication based on the demodulated common control signal. Then, decision section 910 outputs a control signal indicating the decision result to control section 911.

Control section 911 outputs an operation instruction signal/operation stop instruction signal to CDMA section 1501 and HDR section 1502 based on the content of the control signal from decision section 910.

That is, when the type of the communication is a voice communication, control section 911 outputs an operation instruction signal to CDMA section 1501 and an operation stop instruction signal to HDR section 1502. On the other hand, when the type of the communication is a high-speed data communication, control section 911 outputs an operation instruction signal to HDR section 1502 and an operation stop instruction signal to CDMA section 1501.

Through the above operations, in the case of a voice communication, the voice signal received through antenna 902 is subjected to demodulation processing by CDMA section 1501. On the other hand, in the case of a high-speed data communication, the high-speed data signal received through antenna 906 is subjected to demodulation processing by HDR section 1502.

Then, the case where base station apparatus 1002 carries out transmission will be explained. First, control section 911 outputs a common control signal to distinguish whether a signal to be transmitted is a voice signal or high-speed data signal to common control channel modulation/demodulation section 1503. The common control signal is modulated by common control channel modulation/demodulation section 1503, and then transmitted through antenna 909.

Furthermore, control section 911 outputs a common control signal to common control channel modulation/demodulation section 1503 and at the same time outputs an operation instruction signal/operation stop instruction signal to CDMA section 1501 and HDR section 1502.

That is, in the case where the type of the communication is a voice communication, control section 911 outputs an operation instruction signal to CDMA section 1501 and an operation stop instruction signal to HDR section 1502. On the other hand, in the case where the type of the communication is a high-speed data communication, control section 911 outputs an operation instruction signal to HDR section 1502 and an operation stop instruction signal to CDMA section 1501.

Through the above operations, in the case of a voice communication, the voice signal output from voice processing section 903 is subjected to modulation processing by CDMA section 1501. On the other hand, in the case of a high-speed data communication, the high-speed data signal output via input/output terminal 907 is subjected to modulation processing by HDR section 1502.

As shown above, this embodiment makes it possible to carry out a communication by selecting a radio channel to be used according to the use in such a way that a voice communication is carried out using a CDMA-based radio channel for voice communication during a voice communication and a high-speed data communication is carried out using an HDR-based radio channel for high-speed data communication during a high-speed data communication. Therefore, according to this embodiment, it is possible to perform a radio communication based on an appropriate communication system according to the type of communication.

Embodiments 1 to 3 adopt a configuration to decide whether a voice communication is performed or a high-speed data communication is performed based on whether an external apparatus is connected to the input/output terminal or not during data transmission by the mobile station apparatus. However, the decision method is not limited to this. For example, it is also possible to adopt such a configuration that the user of the mobile station apparatus switches between voice communication and high-speed data communication through switch operations.

Furthermore, Embodiments 2 and 3 adopt a configuration of a base station apparatus with 3 antennas provided for each channel. However, the number of antennas is not limited to this. For example, the base station apparatus can also be configured to have one antenna and receive all channel signals through that one antenna. Furthermore, it is also possible to make three antennas to form an array antenna allowing the base station apparatus to form directivity and transmit/receive signals of each channel to/from each mobile station apparatus.

Furthermore, Embodiments 1 to 3 describe a mobile station apparatus as an example of communication terminal apparatus. However, Embodiments 1 to 3 are not only applicable to a mobile station apparatus, but also applicable to a non-mobile communication terminal apparatus such as a personal computer.

As described above, the present invention can prevent a high-speed data communication signal with large power because of a high data transfer rate from affecting a voice communication signal with small power because of a low data transfer rate, thus preventing deterioration of the quality of voice communication at a low data transfer rate.

### Industrial Applicability

The present invention is applicable to a mobile station apparatus used in a mobile communication system and a base station apparatus that carries out a radio communication with this mobile station apparatus.

## Claims

1. A communication terminal apparatus comprising:
a first modulator/demodulator for modulating/demodulating a voice communication signal,
a second modulator/demodulator for modulating/demodulating a data communication signal,
an input/output terminal connectable to an external apparatus; and
a receiver for receiving a control channel signal for use in identifying the type of communication as voice communication or data communication,
**characterized by** further comprising
a communication type determiner for determining the type of communication based on whether or not the external apparatus is connected to said input/oulput terminal in the case of signal transmission and based on the control channel signal in the case of signal reception,
a changeover controller for selecting said first modulator/demodulator or said second modulator/demodulator for communication based on the determined type of communication.

2. The communication terminal apparatus according to claim 1, **characterized in that** said first modulator/demodulator is adapted to modulate/demodulate the voice communication signal based on a TDMA scheme, and said second modulator/demodulator is adapted to modulate/demodulate the data communication signal based on a CDMA scheme.

3. The communication terminal apparatus according to claim 1, **characterized In that** said first modulator/demodulator is adapted to modulate/demodulate the voice communication signal based on a CDMA scheme, and said second modulator/demodulator is adapted to modulate/demodulate the data communication signal based on an HDR scheme.

4. The communication terminal apparatus according to one of claims 1 to 3, **characterized In that** said receiver is adapted to receive the control channel signal through a common control channel.

5. A method for determining the type of communication used in a communication terminal apparatus, comprising the steps of:
receiving a control channel signal for use in identifying the type of communication as voice communication or data communication, and
selecting a first modulator/demodulator for a voice communication signal or a second modulator/demodulator for a data communication signal based on the determined type of communication,
**characterized by** further comprising the step of
determining the type of communication based on whether or not an external apparatus is connected to an input/output terminal of said communication terminal apparatus in the case of signal transmission, and based on the control channel signal in the case of signal reception.

## Patentansprüche

1. Kommunikations-Endgerätevorrichtung, die umfasst:
einen ersten Modulator/Demodulator zum Modulieren/Demodulieren eines Sprach-Kommunikationssignals;
einen zweiten Modulator/Demodulator zum Modulieren/Demodulieren eines Daten-Kommunikationssignals;
einen Eingabe/Ausgabe-Anschluss, der mit einer externen Vorrichtung verbindbar ist, und
einen Empfänger zum Empfangen eines Steuerkanalsignals, das verwendet wird, um den Typ der Kommunikation als Sprach-Kommunikation oder Daten-Kommunikation zu identifizieren,
**gekennzeichnet durch** weiter umfassend
eine Kommunikationstyp-Bestimmungseinrichtung, die den Kommunikationstyp basierend darauf, ob im Fall der Signalübertragung die externe Vorrichtung mit dem Eingabe/Ausgabe-Anschluss verbunden ist oder nicht, und im Fall des Signalempfangs basierend auf dem Steuerkanalsignal bestimmt,
eine Umschalt-Steuerung zum Auswählen des ersten Modulators/Demodulators oder des zweiten Modulators/Demodulators zur Kommunikation basierend auf dem bestimmten Kornmunikationstyp.

2. Kommunikations-Endgerätevorrichtung nach Anspruch 1, **dadurch gekennzeichnet, dass** der erste Modulator/Demodulator eingerichtet ist, das Sprach-Kommunikationssignal basierend auf einem TDMA-Schema zu modulieren/demodulieren, und der zweite Modulator/Demodulator eingerichtet ist, das Daten-Kommunikationssignal basierend auf einem CDMA-Schema zu modulieren/demodulieren.

3. Kommunikations-Endgerätevorrichtung nach Anspruch 1, **dadurch gekennzeichnet, dass** der erste Modulator/Demodulator eingerichtet ist, das Sprach-Kommunikationssignal basierend auf einem CDMA-Schema zu modulieren/demodulieren, und der zweite Modulator/Demodulator eingerichtet ist, das Daten-Kommunikationssignal basierend auf einem HDR-Schema zu modulieren/demodulieren.

4. Kommunikations-Endgerätevorrichtung nach einem der Ansprüche 1 bis 3, **dadurch gekennzeichnet, dass** der Empfänger eingerichtet ist, das Steuerkanalsignal mittels eines gemeinsamen Steuerkanals zu empfangen.

5. Verfahren zum Bestimmen des in einer Kommunikations-Endgerätevorrichtung verwendeten Kommunikationstyps, das die folgenden Schritte umfasst:
Empfangen eines Steuerkanalsignals, das verwendet wird, um den Typ der Kommunikation als Sprach-Kommunikation oder Daten-Kommunikation zu identifizieren, und
Auswählen eines ersten Modulators/Demodulators für ein Sprach-Kommunikationssignal oder eines zweiten Modulators/Demodulators für ein Daten-Kommunikationssignal basierend auf dem bestimmten Kommunikationstyp.
**dadurch gekennzeichnet, dass** das Verfahren weiter den folgenden Schritt umfasst:
Bestimmen des Typs der Kommunikation basierend darauf, ob im Fall der Signalübertragung eine externe Vorrichtung mit einem Eingabe/Ausgabe-Anschluss der Kommunikations-Endgerätevorrichtung verbunden ist oder nicht, und im Fall des Signalempfangs basierend auf dem Steuerkanalsignal.

## Revendications

1. Un dispositif de terminal de communication comprenant :
un premier modulateur / démodulateur servant à moduler / démoduler un signal de communication vocale,
un second modulateur / démodulateur servant à moduler / démoduler un signal de communication de données ;
un terminal d'entrée/sortie pouvant être connecté à un dispositif externe ; et
un récepteur servant à recevoir un signal de voie de commande pour une utilisation afin d'identifier le type de communication comme étant une communication vocale ou une communication de données,
**caractérisé en ce qu'**il comprend en outre
un système déterminant le type de communication servant à déterminer le type de communication selon que le dispositif externe est connecté ou non audit terminal d'entrée/sortie dans le cas d'une émission de signaux et selon un signal de la voie de commande dans le cas d'une réception de signaux,
un dispositif de commande de permutation servant à sélectionner ledit premier modulateur / démodulateur ou ledit second modulateur / démodulateur pour la communication, en fonction du type de communication qui a été déterminé.

2. Le dispositif de terminal de communication selon la revendication 1, **caractérisé en ce que** ledit premier modulateur / démodulateur est adapté à moduler / démoduler le signal de communication vocale en s'appuyant sur un mode AMRT (TDMA), et ledit second modulateur / démodulateur est adapté à moduler / démoduler le signal de communication de données en s'appuyant sur un mode AMRC (CDMA).

3. Le dispositif de terminal de communication selon la revendication 1, **caractérisé en ce que** ledit premier modulateur / démodulateur est adapté à moduler / démoduler le signal de communication vocale en s'appuyant sur un mode AMRC (CDMA), et ledit second modulateur / démodulateur est adapté à moduler / démoduler le signal de communication de données en s'appuyant sur un mode HDR.

4. Le dispositif de terminal de communication selon l'une des revendications 1 à 3, **caractérisé en ce que** ledit récepteur est adapté à recevoir le signal de voie de commande par une voie de commande commune.

5. Un procédé de détermination du type de communication utilisé dans un dispositif de terminal de communication, comprenant les étapes consistant à :
recevoir un signal de voie de commande pour une utilisation afin d'identifier le type de communication comme étant une communication vocale ou une communication de données, et
sélectionner un premier modulateur / démodulateur pour un signal de communication vocale ou un second modulateur / démodulateur pour un signal de communication de données en fonction du type de communication qui a été déterminé,
**caractérisé en ce qu'**il comprend en outre l'étape consistant à
déterminer le type de communication selon qu'un dispositif externe est connecté ou non audit terminal d'entrée/sortie dudit dispositif de terminal de communication dans le cas d'une émission de signaux et selon le signal de la voie de commande dans le cas d'une réception de signaux.
